# EUROPÄISCHE PATENTSCHRIFT

(11) **EP 3 504 420 B1**
(45) Veröffentlichungstag und Bekanntmachung des Hinweises auf die Patenterteilung: **24.03.2021**
(21) Anmeldenummer: 17758531.2
(22) Anmeldetag: 28.08.2017
(51) Int. Cl.: F02M 37/22

(54) **ABSCHEIDUNGSVORRICHTUNG FÜR FLUIDSAMMELSÜMPFE, INSBESONDERE VON FILTER- ODER WASSERABSCHEIDERN, UND FLUIDBEHÄLTEREINRICHTUNGEN MIT EINER SOLCHEN**
SEPARATING DEVICE FOR FLUID-COLLECTING SUMPS, IN PARTICULAR OF FILTER OR WATER SEPARATORS, AND FLUID CONTAINER DEVICES COMPRISING SUCH A SEPARATING DEVICE
DISPOSITIF DE SÉPARATION POUR CARTERS COLLECTEURS DE FLUIDE, EN PARTICULIER DE SÉPARATEURS D'EAU OU DE SÉPARATEURS À FILTRE, ET DISPOSITIFS CONTENANTS DE FLUIDE COMPRENANT UN TEL DISPOSITIF DE SÉPARATION

(30) Priorität: 26.08.2016 DE 202016104693 U
(43) Veröffentlichungstag der Anmeldung: 03.07.2019
(73) Patentinhaber: FAUDI Aviation GmbH, 35260 Stadtallendorf (DE)
(72) Erfinder: LAUBER, Uwe, 35096 Weimar (DE)
(74) Vertreter: Patentanwälte Olbricht Buchhold Keulertz
(86) Internationale Anmeldenummer: PCT/EP2017/071529
(87) Internationale Veröffentlichungsnummer: WO 2018/037132

(56) Entgegenhaltungen:
- EP-A1- 2 987 996
- DE-U1-202016 105 701
- US-A- 3 849 285
- US-A- 3 966 602
- US-A- 3 966 603
- US-A- 4 649 281
- US-A- 5 139 653

## Beschreibung

Die Erfindung betrifft eine Abscheidungsvorrichtung für Fluidsammelsümpfe, insbesondere von Filter- oder Wasserabscheidern, gemäß Anspruch 1 und Fluidbehältereinrichtungen mit einer solchen gemäß den Ansprüchen 12 und 14.

Abscheidungsvorrichtung für Fluidsammelsümpfe von Fluidbehältern, insbesondere von Filter- oder Wasserabscheidern, dienen dazu, ein das Hauptfluid verunreinigendes Fluid oder sich nach oben oder unten absetzende Partikel zu sammeln und von dem Sammelort bei Bedarf abzulassen, auch Auschleusen oder Abziehen genannt. Hierbei soll das Hauptfluid soweit wie möglich im Fluidbehälter verbleiben.

Aus dem Stand der Technik ist es beispielsweise bekannt, ein Abflussventil am Boden des Fluidsammelsumpfs manuell zu öffnen und das Abflussventil wieder zu schließen, wenn das leichtere Hauptfluid die Abflussöffnung erreicht. Unter leicht und schwer im Sinne der Erfindung ist eine geringe Dichte (leicht) und eine hohe Dichte (schwer) zu verstehen. Es gibt als Stand der Technik z.B. US5139653 und US3966602.

Problematisch hierbei ist, dass die Reaktionszeit des Bedieners meist so langsam ist, dass vor dem Schließen des Abflussventils auch Hauptfluid austritt. Dieses ist anschließend verloren und in einem Sammelbehälter bzw. Schmutztank sammelt sich eine Mischung aus dem leichten und dem schweren Fluid, die unter Umständen für die Entsorgung aufwendig aufbereitet werden muss. Dies trifft insbesondere auf Anwendungsfälle zu, in denen schweres Wasser aus leichtem Brennstoff wie Öl, Benzin, Diesel oder Kerosin abgeschieden wird.

Ein weiteres Problem ist hierbei, dass an der Phasengrenze von beispielsweise Kerosin und Wasser ein Mikrobenwachstum auftritt, wobei sich die Mikroben von hier in das Kerosin ausbreiten und dieses verunreinigen. Die Stärke des Mikrobenwachstums hängt von der Kontaktfläche der Phasengrenze ab. Diese ist bei seltenen manuellen Entleerungen aus großen Fluidsammelsümpfen verhältnismäßig groß, sodass hier starke Verunreinigungen des Kerosins mit Mikroben auftreten.

Aufgabe der Erfindung ist es daher, die Nachteile aus dem Stand der Technik zu überwinden und eine Abscheidungsvorrichtung für Fluidsammelsümpfe bereitzustellen, mit der möglichst wenig Hauptfluid beim Auslassen des verunreinigenden Fluids austritt und mit der Brennstoff wie Kerosin möglichst frei von Mikroben gehalten werden kann. Ziel ist es außerdem eine Nachrüstbarkeit bestehender Fluidsammelsümpfe mit der Abscheidungsvorrichtung zu ermöglichen, damit die Investitionskosten für den Betreiber gering sind. Die Abscheidungsvorrichtung sollte zudem kostengünstig und zuverlässig sein sowie einfach gewartet werden können, am besten ohne den Fluidsammelsumpf komplett entleeren zu müssen.

Hauptmerkmale der Erfindung sind in den Ansprüchen 1, 12 und 14 angegeben. Ausgestaltungen sind Gegenstand der Ansprüche 2 bis 11,13 und 15.

Die Erfindung betrifft eine Abscheidungsvorrichtung für Fluidsammelsümpfe, insbesondere von Filter- oder Wasserabscheidern, mit einem Leitungsrohr, das eine Anschlussöffnung und eine Ablassöffnung aufweist, wobei in dem Leitungsrohr ein Durchflussbegrenzer, ein Phasendetektionssensor zur Detektion einer Phasengrenze zwischen einem leichten Fluid und einem schweren Fluid, sowie zwischen dem Phasendetektionssensor und der Ablassöffnung ein elektronisch betätigbares Ablassventil angeordnet sind, wobei das Ablassventil derart mit einer Regeleinrichtung angesteuert ist, dass das Ablassventil bei der Detektion einer Phasengrenze mit dem Phasendetektionssensor von einer Offenstellung in eine Geschlossenstellung gebracht wird.

Durch diese Vorrichtung ist nunmehr ein voll automatisches Ausscheiden von einem zweiten Fluid aus einem ersten Hauptfluid möglich. Das Ausscheiden ist dabei so häufig und regelmäßig durchführbar, dass es nur zu kleinen Ansammlungen des zweiten Fluids kommt. Sofern es sich um eine Ausscheidung von Wasser aus einem Brennstoff wie Öl, Benzin, Diesel oder Kerosin handelt, sind folglich nur kleinflächige Phasengrenzen vorhanden, sodass der Brennstoff nicht mit an der Phasengrenze wachsenden Mikroben verunreinigt wird. Außerdem stellt die Abscheidungsvorrichtung sicher, dass kein oder nur sehr geringe Mengen an Hauptfluid mit abgelassen werden. Wenn die Phasengrenze detektiert wird, ist das Hauptfluid nämlich noch nicht am Ablassventil angekommen. Aufgrund der Ausbildung mit einem Leitungsrohr lässt sich die Abscheidungsvorrichtung auf einfache Art an einen bestehenden Fluidsammelsumpf anschließen und ist dann sofort einsetzbar. Weil es hier meist ohnehin eine Ablassöffnung gibt, ist eine einfache Nachrüstung mit der erfindungsgemäßen Abscheidungsvorrichtung möglich.

Gemäß einer näheren Ausgestaltung, ist der Phasendetektionssensor in einem vertikalen Leitungsabschnitt des Leitungsrohres angeordnet. Das hat den Vorteil, dass eine horizontale Phasengrenze gut detektiert werden kann.

In einer ersten Variante kann der Phasendetektionssensor geodätisch unterhalb der Anschlussöffnung angeordnet sein. Hierdurch kann aus einem bodenseitigen Fluidsumpf schwereres Fluid abgelassen werden. Alternativ ist es jedoch auch möglich, dass der Phasendetektionssensor geodätisch oberhalb der Anschlussöffnung angeordnet ist. Hierdurch kann aus einem deckenseitigen Fluidsumpf leichtes Fluid abgelassen werden.

Bei einer speziellen Ausführung erstreckt sich der vertikale Leitungsabschnitt von dem Phasendetektionssensor bis zu der Anschlussöffnung. Hier kann sich eine horizontale Phasengrenze ohne Turbulenzen auf- und abwärts verschieben.

Ferner ist in einer optionalen Ausgestaltungsform vorgesehen, dass der Phasendetektionssensor soweit von der Anschlussöffnung beabstandet angeordnet ist, dass die Phasengrenze mit der Regeleinrichtung zwischen der Anschlussöffnung und dem Phasendetektionssensor haltbar ist. Mithin weist die Phasengrenze eine kleine Oberfläche auf und es kann nur zu sehr geringem Mikrobenwachstum kommen.

Eine einfache Wartung der Abscheidungsvorrichtung wird bei einer Ausgestaltung erreicht, bei der zwischen dem Phasendetektionssensor und der Anschlussöffnung ein Verschlussventil angeordnet ist. Wenn das Verschlussventil geschlossen ist, kann der Phasendetektionssensor ausgebaut werden, ohne dass eine größere Menge Fluid austritt. Dies ist beispielsweise zur Kalibrierung und Wartung des Phasendetektionssensors sinnvoll.

In einer speziellen Ausführungsform weist das Verschlussventil ein um eine Drehachse drehbares Verschlusselement auf, wobei die Drehachse quer zum Leitungsrohr ausgerichtet ist. Derartige drehbare Verschlusselemente lassen sich einfach betätigen.

Eine besonders kompakte Ausgestaltung gelingt, wenn sich der Phasendetektionssensor entlang der Drehachse in das Leitungsrohr erstreckt. Damit gelangt die Phasengrenze wenn überhaupt nur minimal hinter dem Verschlusselement und selbst im Wartungsfall gerät wenn überhaupt nur wenig Hauptfluid zur Ablassöffnung oder einer anderen Entleerungsöffnung.

Besonders einfach betätigbar und dicht abschließend ist eine Variante, bei der das Verschlussventil ein Kugelhahn ist. Hierbei kann vorgesehen sein, dass ein Betätigungsmittel des Kugelhahns um die Drehachse drehbar ist, wobei das Betätigungsmittel auf der dem Phasendetektionssensor gegenüberliegenden Seite des Leitungsrohres angeordnet ist. Damit kommen sich das Betätigungsmittel, zum Beispiel ein Hebel, und der Phasendetektionssensor nicht in die Quere.

Auch das Verschlussventil ist vorzugsweise in dem vertikalen Leitungsabschnitt angeordnet. Damit kann sich der vertikale Leitungsabschnitt von dem Phasendetektionssensor bis zur Anschlussöffnung erstrecken.

Weiterhin ist der Durchflussbegrenzer gemäß einer speziellen Ausführungsform zwischen dem Phasendetektionssensor und dem Ablassventil angeordnet. Damit passiert die Phasengrenze typischerweise nicht den Durchflussbegrenzer wo sie verwirbelt werden könnte. Außerdem kann das Ablassventil eine definierte Fluid ablassen.

Der Durchflussbegrenzer begrenzt das Durchflussvolumen bis zu einem Leitungsdruck auf der Seite der Anschlussöffnung von 10 bar, vorzugsweise 14 bar und weiter bevorzugt 16 bar auf einen konstanten Durchflusswert. Damit funktioniert die präzise Regelung des Ausschleusens unabhängig vom aktuellen Leitungsdruck auf der Seite der Anschlussöffnung.

Hierzu trägt auch eine spezielle Variante bei, nach welcher der konstante Durchflusswert zwischen 0,5 l/min und 3 l/min, bevorzugt zwischen 0,6 l/min und 2,5 l/min, weiter bevorzugt zwischen 0,7 l/min und 2,0 l/min, weiter bevorzugt zwischen 0,75 l/min und 1,5 l/min und besonders bevorzugt zwischen 0,8 l/min und 1,2 l/min beträgt. In der Praxis des Wasserabscheidens aus Treibstoff bewährt sich ein konstanter Durchflusswert von 1,0 l/min. Hier kommt es zu den geringsten Leckagen des nicht auszuschleusenden Treibstoffs.

Eine besonders gute Nachrüstbarkeit wird erreicht, wenn das Leitungsrohr ein 3/4-Zoll Rohr ist. Viele manuelle Ausschleusevorrichtungen beruhen nämlich auf 3/4-Zollrohren, insbesondere G 3/4". Hieran kann die erfindungsgemäße Abscheidungsvorrichtung einfach mit der Anschlussöffnung angeschlossen werden. Ein weiterer Vorteil ist, dass eine Vielzahl von vorgefertigten Komponenten in der Größe 3/4-Zoll bzw. G 3/4" existiert und ein kostengünstiger modularer Aufbau der Abscheidungsvorrichtung erzielt werden kann. Diese ist folglich auch einfach und kostengünstig reparierbar falls es einmal zu einem Schaden kommt.

Eine besonders einfache Montage der Abscheidungsvorrichtung gelingt, wenn die Anschlussöffnung und/oder die Ablassöffnung ein 3/4-Zoll Gewinde aufweisen, insbesondere ein G 3/4" Gewinde.

Weil das Ablassventil eine präzise Regelung bei relativ geringem Durchfluss sicherstellen muss, kann hierüber meist nur eine begrenzte Menge Fluid ausströmen. Zum Ablassen größerer Fluidmengen bietet es sich an, zwischen der Anschlussöffnung und dem Ablassventil ein Entleerungsventil anzuordnen. Dieses kann zum Beispiel zum Entleeren des Fluidspeichers geöffnet werden.

Es bietet sich daher eine Ausgestaltung an, bei der das Entleerungsventil manuell öffenbar und schließbar ist. Insbesondere kann das Entleerungsventil ein Kugelhahn sein. Dieser ist schnell und einfach betätigbar.

Bevorzugt ist das Entleerungsventil zwischen dem Ablassventil und dem Phasendetektionssensor angeordnet. Damit kann auch bei manuellem Ablassen von Fluid über das Entleerungsventil die Phasengrenze mit dem Phasendetektionssensor detektiert werden.

Besonders bevorzugt ist das Entleerungsventil zwischen der Anschlussöffnung und dem Durchflussbegrenzer angeordnet. Damit muss das Fluid nicht durch den Durchflussbegrenzer strömen, bevor es das Entleerungsventil erreicht. Folglich ist die Entleerung schnell.

In einer speziellen Ausführungsform sind das Ablassventil und das Entleerungsventil auf unterschiedlichen Seiten eines Verteilers des Leitungsrohrs angeordnet. Damit kann ein kostengünstiger Kugelhahn als Entleerungsventil eingesetzt werden. Alternativ käme als Entleerungsventil jedoch auch ein Dreiwegeventil in Betracht.

Dabei schließt sich der Verteiler gemäß einer Ausgestaltung an den vertikalen Leitungsabschnitt an. Hierdurch kann der notwendige Bauraum unter- bzw. oberhalb des Fluidspeichers verhältnismäßig flach sein.

Ein kostengünstiger modularer Aufbau gelingt, wenn der Verteiler über eine Schraubverbindung mit dem vertikalen Leitungsabschnitt verbunden ist.

Um einen flachen Aufbau zu erzielen, bietet es sich ein Design an, nach dem der Verteiler eine T-Gabelung aufweist. Besonders kostengünstig verfügbar sind Ausgestaltungen, bei der der Verteiler ein T-Stück ist.

Zu einem modularen Aufbau trägt auch eine Ausführungsform bei, bei der das Entleerungsventil über eine Schraubverbindung mit dem Verteiler verbunden ist. Eine hohe Modularität ergibt sich zudem, wenn der Durchflussbegrenzer über eine Schraubverbindung mit dem Verteiler verbunden ist.

Ein weiterer Baustein zu einer hohen Modularität kann darin bestehen, dass das Ablassventil über eine Schraubverbindung mit dem Durchflussbegrenzer verbunden ist.

In einer Variante der Abscheidungsvorrichtung ist das Ablassventil derart mit der Regeleinrichtung angesteuert, dass das Ablassventil bei der Detektion des schweren Fluids mit dem Phasendetektionssensor von der Geschlossenstellung in die Offenstellung gebracht wird, um das schwere Fluid abzulassen. Hier wird also leichtes Hauptfluid von einer schwereren Verunreinigung befreit. Hierzu sollte der Phasendetektionssensor unterhalb der Anschlussöffnung angeordnet sein.

Gemäß einer anderen Variante der Abscheidungsvorrichtung ist das Ablassventil derart mit der Regeleinrichtung angesteuert, dass das Ablassventil bei der Detektion des leichten Fluids mit dem Phasendetektionssensor in eine Offenstellung gebracht wird, um das leichte Fluid abzulassen. Dies dient also dazu ein schweres Hauptfluid von einer leichteren Verunreinigung zu befreien. Dies kann zum Beispiel Öl in Wasser sein. Hierzu sollte der Phasendetektionssensor oberhalb der Anschlussöffnung angeordnet sein.

Zur Überwachung der Funktionalität der Abscheidungsvorrichtung bietet es sich an, die Offenstellung mit einem Visualisierungsmittel anzuzeigen. Gut zu erkennen sind insbesondere Varianten, bei denen das Visualisierungsmittel ein Leuchtmittel ist, vorzugsweise eine LED-Anzeige. Diese sind auch in schlecht beleuchteter Umgebung gut erkennbar.

Optional kann die Geschlossenstellung mit einem Visualisierungsmittel angezeigt werden. Dieses Visualisierungsmittel kann ein Leuchtmittel sein, vorzugsweise eine LED-Anzeige.

Zur Vermeidung zu schneller Wechsel von der Offenstellung in die Geschlossenstellung und umgekehrt, sieht eine spezielle Ausgestaltung vor, dass die Regeleinrichtung einen Verzögerungsgeber aufweist, mit dem die Regeleinrichtung ein Regelsignal für das Ablassventil erst nach einer definierten Detektionszeit des Phasendetektionssensors ausgibt. Hierdurch wird auch der Verschleiß des Ablassventils reduziert. In einer preiswerteren Ausgestaltung, weist der Verzögerungsgeber ein Zeitrelais auf.

Aufgrund des begrenzten Durchsatzes des Durchflussbegrenzers kann eine Ergänzung der Abscheidungsvorrichtung derart sinnvoll sein, dass diese einen Alarmgeber aufweist, der ein Alarmsignal ausgibt, wenn das Ablassventil die Offenstellung länger als für eine definierte Zeitspanne einnimmt, und/oder wenn der Phasendetektionssensor das schwere Fluid bzw. das verunreinigende Fluid länger als für eine definierte Zeitspanne detektiert. Mit dem Alarmsignal wird darauf aufmerksam gemacht, dass mehr verunreinigendes Fluid in die Anschlussöffnung gelangt, als mit dem Ablassventil abgelassen werden kann. Kostengünstig realisierbar ist der Alarmgeber, wenn dieser ein Zeitrelais aufweist.

Die Erfindung betrifft außerdem eine Fluidbehältereinrichtung mit einem bodenseitigen Fluidsammelsumpf für ein sich aus einem leichten Fluid absetzendes schweres Fluid, wobei der Boden des Fluidsammelsumpfes in die Anschlussöffnung einer Abscheidungsvorrichtung mündet, wie sie vorstehend und nachstehend beschrieben ist. So verbaut, kann die Abscheidungsvorrichtung das schwerere und sich daher absetzende Fluid ausschleusen, sodass das leichtere Hauptfluid gereinigt wird. Hierzu sollte der Phasendetektionssensor geodätisch unterhalb der Anschlussöffnung angeordnet sein.

In einem besonderen Ausgestaltung der Fluidbehältereinrichtung ist in oder über dem Fluidsammelsumpf als leichtes Fluid ein fluider Brennstoff angeordnet, der mit dem schweren Fluid bestehend aus Wasser versetzt ist, wobei sich das schwere Fluid in Richtung des Bodens des Fluidsammelsumpfes und von hier in die Anschlussöffnung absetzt. Damit kann hochwertiger Brennstoff bereitgestellt werden. Gleichzeitig wird erfindungsgemäß erreicht, dass in einen Auffangbehälter nahezu ausschließlich Wasser gelangt. Dessen Entsorgungskosten sind folglich gering.

Bei einer speziellen Variante der Fluidbehältereinrichtung ist oberhalb des Fluidsammelsumpfes eine Filtereinrichtung angeordnet. Gerade bei der Filterung entmischen sich nicht gelöste Fluide voneinander, die sich dann aufgrund unterschiedlicher Dichte einschichten.

Weiterhin betrifft die Erfindung eine Fluidbehältereinrichtung mit einem deckenseitigen Fluidsammelsumpf für ein sich aus einem schweren Fluid nach oben absetzendes leichtes Fluid, wobei die Decke des Fluidsammelsumpfes in die Anschlussöffnung einer Abscheidungsvorrichtung mündet, wie sie vorstehend und nachstehend beschrieben ist.

Die vorteilhafte Verwendung dieser Fluidbehältereinrichtung erlaubt es beispielsweise, leichteres Öl aus schwererem Wasser zu entfernen. Hierzu sollte der Phasendetektionssensor geodätisch oberhalb der Anschlussöffnung angeordnet sein.

Bevorzugt ist eine nähere Ausgestaltung der Fluidbehältereinrichtungen, bei der die Ablassöffnung mit einem Auffangbehälter strömungsverbunden ist. Mit einem solchen lässt sich das ausgeschleuste Fluid sammeln.

In einer Variante, bei der zwischen der Anschlussöffnung und dem Ablassventil ein Entleerungsventil, wie es vor- und nachstehend beschrieben ist, angeordnet ist, bietet es sich an, dass das Entleerungsventil mit dem Auffangbehälter strömungsverbunden ist. Auch über das Entleerungsventil ausgeschleustes Fluid gelangt so in den auf Auffangbehälter.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Es zeigt:

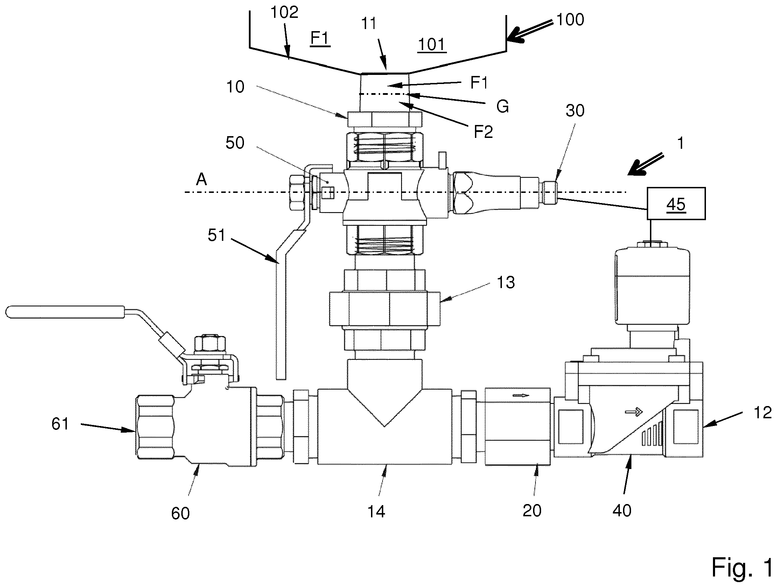

- Fig. 1: eine Fluidbehältereinrichtung mit einer Abscheidungsvorrichtung.

In **Fig. 1** ist eine Fluidbehältereinrichtung 100 mit einer Abscheidungsvorrichtung 1 dargestellt.

Die Abscheidungsvorrichtung 1 ist insbesondere für Fluidsammelsümpfe wie Filter- oder Wasserabscheider geeignet. Sie weist ein Leitungsrohr 10 bzw. eine Leitungsverrohrung mit einer Anschlussöffnung 11 und einer Ablassöffnung 12 auf. In dem Leitungsrohr 10 sind ein Durchflussbegrenzer 20, ein Phasendetektionssensor 30 zur Detektion einer Phasengrenze G zwischen einem leichten Fluid F1 und einem schweren Fluid F2, sowie zwischen dem Phasendetektionssensor 30 und der Ablassöffnung 12 ein elektronisch betätigbares Ablassventil 40 angeordnet.

Der Phasendetektionssensor 30 sitzt in einem vertikalen Leitungsabschnitt 13 des Leitungsrohres 10, und zwar geodätisch unterhalb der Anschlussöffnung 11. Der vertikale Leitungsabschnitt 13 erstreckt sich von dem Phasendetektionssensor 30 bis zu der Anschlussöffnung 11.

Außerdem ist zwischen dem Phasendetektionssensor 30 und der Anschlussöffnung 11 ein Verschlussventil 50 angeordnet. Das Verschlussventil 50 sitzt also auch in dem vertikalen Leitungsabschnitt 13. Bei dem Verschlussventil 50 handelt es sich um einen Kugelhahn. Dieser hat ein um eine Drehachse A drehbares Verschlusselement, wobei die Drehachse A quer zum Leitungsrohr 10, insbesondere dem vertikalen Leitungsabschnitt 13 ausgerichtet ist.

Der Phasendetektionssensor 30 erstreckt sich entlang der Drehachse A in das Leitungsrohr 10 und das Verschlusselement kann das Leitungsrohr 10 unmittelbar vor dem Phasendetektionssensor 30 verschließen. Weiterhin ist ein Betätigungsmittel 51, insbesondere ein Hebel des Kugelhahns, um die Drehachse A drehbar gelagert, wobei das Betätigungsmittel 51 auf der dem Phasendetektionssensor 30 gegenüberliegenden Seite des Leitungsrohres 10 angeordnet ist.

Der Durchflussbegrenzer 20 ist zwischen dem Phasendetektionssensor 30 und dem Ablassventil 40 angeordnet. In der Praxis besonders geeignet sind Durchflussbegrenzer 20, die das Durchflussvolumen bis zu einem Leitungsdruck auf der Seite der Anschlussöffnung 11 von 10 bar, vorzugsweise 14 bar, weiter bevorzugt 16 bar und ganz besonders bevorzugt 20 bar auf einen konstanten Durchflusswert begrenzen. Der konstante Durchflusswert sollte zwischen 0,5 l/min und 3 l/min, bevorzugt zwischen 0,6 l/min und 2,5 l/min, weiter bevorzugt zwischen 0,7 l/min und 2,0 l/min, weiter bevorzugt zwischen 0,75 l/min und 1,5 l/min und besonders bevorzugt zwischen 0,8 l/min und 1,2 l/min liegen.

Weiterhin erkennt man, dass zwischen der Anschlussöffnung 11 und dem Ablassventil 40 ein Entleerungsventil 60 angeordnet ist, das als Kugelhahn ausgebildet und manuell öffenbar und schließbar ist. Insbesondere ist das Entleerungsventil 60 zwischen dem Ablassventil 40 und dem Phasendetektionssensor 30 angeordnet ist. Außerdem ist das Entleerungsventil 60 zwischen der Anschlussöffnung 11 und dem Durchflussbegrenzer 20 angeordnet.

Man erkennt, dass das Ablassventil 40 und das Entleerungsventil 60 auf unterschiedlichen Seiten eines Verteilers 14 des Leitungsrohrs 10 angeordnet sind. Der Verteiler 14 schließt sich an den vertikalen Leitungsabschnitt 13 an und weist eine T-Gabelung auf.

Wie man sieht, ist die Abscheidungsvorrichtung 1 modular aus Einzelteilen aufgebaut. Der Verteiler 14 ist als T-Stück ausgebildet und eingangsseitig über eine Schraubverbindung mit dem vertikalen Leitungsabschnitt 13 verbunden. An der ersten Ausgangsseite ist der Verteiler 14 über eine Schraubverbindung mit dem Entleerungsventil 60 und an der zweiten Ausgangsseite über eine Schraubverbindung mit dem Durchflussbegrenzer 20 verbunden. Das Ablassventil 40 ist wiederum über eine Schraubverbindung mit dem Durchflussbegrenzer 20 verbunden. Auch das Verschlussventil 50 ist über Schraubverbindungen in das Leitungsrohr 10 bzw. den vertikalen Leitungsabschnitt 13 eingebunden.

Zum Anschließen weiterer Leitungen weisen die Anschlussöffnung 11, die Auslassöffnung 12 und eine Entleerungsöffnung 61 des Entleerungsventils 60 jeweils ein Gewinde auf. In der Praxis erweist es sich von Vorteil, wenn das Leitungsrohr 10 ein 3/4-Zoll Rohr ist und die Anschlussöffnung 11, die Ablassöffnung 12 und die Entleerungsöffnung 61 ein 3/4-Zoll Gewinde aufweisen, insbesondere ein G 3/4" Gewinde.

Ferner sieht man in Fig. 1, dass die Fluidbehältereinrichtung 100 einen bodenseitigen Fluidsammelsumpf 101 für ein sich aus einem leichten Fluid F1 absetzendes schweres Fluid F2 aufweist. Dabei mündet der Boden 102 des Fluidsammelsumpfes 101 in die Anschlussöffnung 11 der Abscheidungsvorrichtung 1. Weil der Phasendetektionssensor 30 geodätisch unterhalb der Anschlussöffnung 11 angeordnet ist, lässt sich das schwerere Fluid F2 automatisiert mit der Abscheidungsvorrichtung 1 ablassen.

So ist es beispielsweise möglich, dass in oder über dem Fluidsammelsumpf 101 als leichtes Fluid F1 ein fluider Brennstoff angeordnet ist, der mit dem schweren Fluid F2 bestehend aus Wasser versetzt ist, wobei sich das schwere Fluid F2 in Richtung des Bodens 102 des Fluidsammelsumpfes 101 und von hier in die Anschlussöffnung 11 absetzt.

Das Ablassventil 40 ist derart mit einer Regeleinrichtung 45 angesteuert, dass das Ablassventil 40 bei der Detektion der Phasengrenze G mit dem Phasendetektionssensor 30 von einer Offenstellung in eine Geschlossenstellung gebracht wird. Hierdurch kann aus dem bodenseitigen Fluidsumpf 101 schwereres Fluid F2 abgelassen werden. Außerdem wird das Ablassventil 40 derart mit der Regeleinrichtung 45 angesteuert, dass es bei der Detektion des schweren Fluids F2 mit dem Phasendetektionssensor 30 von der Geschlossenstellung in die Offenstellung gebracht wird, um das schwere Fluid F2 abzulassen.

Dabei ist der Phasendetektionssensor 30 soweit von der Anschlussöffnung 11 beabstandet angeordnet, dass die Phasengrenze G mit der Regeleinrichtung 45 zwischen der Anschlussöffnung 11 und dem Phasendetektionssensor 30 haltbar ist. Das gilt zumindest für die normalerweise erwartete Stärke der Verunreinigung des Hauptfluids F1 mit dem schwereren Fluid F2.

Die Regeleinrichtung 45 weist einen Verzögerungsgeber auf, mit dem sie ein Regelsignal für das Ablassventil 40 erst nach einer definierten Detektionszeit des Phasendetektionssensors 30 ausgibt. Es können dabei auch unterschiedliche Verzögerungen definiert werden, mit der einerseits die Ausgabe des Regelsignals nach der Detektion der Phasengrenze verzögert wird und andererseits die Ausgabe des Regelsignals nach der Detektion des auszuschleusenden Fluids F2 verzögert wird. Dabei besteht die Option, dass die Regeleinrichtung 45 die definierten Detektionszeit anhand von vorangegangenen Schaltzyklen automatisch anpasst. In einer einfachen Ausgestaltung ist der Verzögerungsgeber als Zeitrelais ausgestaltbar.

Außerdem weist die Abscheidungsvorrichtung 1 einen Alarmgeber auf, der ein Alarmsignal ausgibt, wenn das Ablassventil die Offenstellung länger als für eine definierte Zeitspanne einnimmt, und/oder wenn der Phasendetektionssensor 30 das schwere Fluid F2 länger als für eine definierte Zeitspanne detektiert. Mit dem Alarmsignal wird darauf aufmerksam gemacht, dass mehr schweres Fluid F2 in die Anschlussöffnung 11 gelangt, als mit dem Ablassventil 40 abgelassen werden kann. Als Alarmsignale sind akustische, taktile und visuelle Signale geeignet, um beispielsweise Bediener auf den Ausnahmezustand hinzuweisen. Optional können jedoch auch Fehlersignale an elektronische Steuereinrichtungen ausgegeben werden. Es ist möglich, die definierte Zeitspanne mit einem Zeitrelais vorzugeben.

Die Erfindung ist nicht auf eine der vorbeschriebenen Ausführungsformen beschränkt, sondern in vielfältiger Weise abwandelbar.

So besteht die Option, die Offenstellung und/oder die Geschlossenstellung mit einem Visualisierungsmittel anzuzeigen. Das Visualisierungsmittel kann zum Beispiel ein Leuchtmittel oder eine LED-Anzeige sein.

Eine weitere Ergänzung kann darin bestehen, dass oberhalb des Fluidsammelsumpfes 101 eine Filtereinrichtung angeordnet ist.

Nicht dargestellt ist auch eine Ergänzung derart, dass die Ablassöffnung 12 und/oder das Entleerungsventil 60 mit einem Auffangbehälter oder Schmutztank strömungsverbunden sind.

Eine alternative Ausgestaltung der Fluidbehältereinrichtung 100 nutzt eine zuvor beschriebene Abscheidungsvorrichtung 1, um ein leichtes Fluid F1 aus einem schweren Fluid F2 auszuschleusen. Hierzu weist die alternative Fluidbehältereinrichtung 100 einen deckenseitigen Fluidsammelsumpf 101 für ein sich aus einem schweren Fluid F2 nach oben absetzendes leichtes Fluid F1 auf, wobei die Decke des Fluidsammelsumpfes 101 in die Anschlussöffnung 11 der Abscheidungsvorrichtung 1 mündet. Hier wird die Abscheidungsvorrichtung 1 so ausgerichtet, dass der Phasendetektionssensor 30 geodätisch oberhalb der Anschlussöffnung angeordnet ist.

In diesem Fall wird das Ablassventil 40 derart mit der Regeleinrichtung 45 angesteuert, dass es bei der Detektion des leichten Fluids F2 mit dem Phasendetektionssensor 30 in eine Offenstellung gebracht wird, um das leichte Fluid F2 abzulassen. Geschlossen wird das Ablassventil 40 wiederum, wenn die Phasengrenze G detektiert wird.

Mit dieser alternativen Fluidbehältereinrichtung 100 ist nicht nur ein Ausschleusen von leichterem flüssigen Fluid möglich, sondern beispielsweise auch ein Entlüften, das heißt das Ablassen von Luft als leichtem gasförmigen Fluid.

### Bezugszeichenliste

- 1: Abscheidungsvorrichtung

- 10: Leitungsrohr
- 11: Anschlussöffnung
- 12: Ablassöffnung
- 13: vertikaler Leitungsabschnitt
- 14: Verteiler

- 20: Durchflussbegrenzer
- 30: Phasendetektionssensor
- 40: Ablassventil
- 45: Regeleinrichtung

- 50: Verschlussventil
- 51: Betätigungsmittel

- 60: Entleerungsventil
- 61: Entleerungsöffnung

- 100: Fluidbehältereinrichtung
- 101: Fluidsammelsumpf
- 102: Boden

- A: Drehachse
- F1: leichtes Fluid
- F2: schweres Fluid
- G: Phasengrenze

## Patentansprüche

1. **Abscheidungsvorrichtung (1)** für Fluidsammelsümpfe, insbesondere von Filter- oder Wasserabscheidern,
- mit einem Leitungsrohr (10), das eine Anschlussöffnung (11) und eine Ablassöffnung (12) aufweist,
- wobei in dem Leitungsrohr (10) ein Phasendetektionssensor (30) zur Detektion einer Phasengrenze (G) zwischen einem leichten Fluid (F1) und einem schweren Fluid (F2), sowie zwischen dem Phasendetektionssensor (30) und der Ablassöffnung (12) ein elektronisch betätigbares Ablassventil (40) angeordnet sind,
- wobei das Ablassventil (40) derart mit einer Regeleinrichtung (45) angesteuert ist, dass das Ablassventil (40) bei der Detektion einer Phasengrenze (G) mit dem Phasendetektionssensor (30) von einer Offenstellung in eine Geschlossenstellung gebracht wird,
- wobei der Phasendetektionssensor (30) in einem vertikalen Leitungsabschnitt (13) des Leitungsrohres (10) angeordnet ist, und
**dadurch gekennzeichnet, dass**
- in dem Leitungsrohr (10) ein Durchflussbegrenzer (20) angeordnet ist,
- wobei der Durchflussbegrenzer (20) das Durchflussvolumen bis zu einem Leitungsdruck auf der Seite der Anschlussöffnung (11) von 10 bar auf einen konstanten Durchflusswert begrenzt.

2. Abscheidungsvorrichtung (1) nach Anspruch 1, **dadurch gekennzeichnet, dass** sich der vertikale Leitungsabschnitt (13) von dem Phasendetektionssensor (30) bis zu der Anschlussöffnung (11) erstreckt.

3. Abscheidungsvorrichtung (1) nach einem der vorhergehenden Ansprüche, **dadurch gekennzeichnet, dass** zwischen dem Phasendetektionssensor (30) und der Anschlussöffnung (11) ein Verschlussventil (50) angeordnet ist.

4. Abscheidungsvorrichtung (1) nach Anspruch 3, **dadurch gekennzeichnet, dass** das Verschlussventil (50) ein um eine Drehachse (A) drehbares Verschlusselement aufweist, wobei die Drehachse (A) quer zum Leitungsrohr (10) ausgerichtet ist.

5. Abscheidungsvorrichtung (1) nach Anspruch 4, **dadurch gekennzeichnet, dass** sich der Phasendetektionssensor (30) entlang der Drehachse (A) in das Leitungsrohr (10) erstreckt.

6. Abscheidungsvorrichtung (1) nach einem der Ansprüche 4 oder 5, **dadurch gekennzeichnet, dass** das Verschlussventil (50) ein Kugelhahn ist, wobei ein Betätigungsmittel (51) des Kugelhahns um die Drehachse (A) drehbar ist, wobei das Betätigungsmittel (51) auf der dem Phasendetektionssensor (30) gegenüberliegenden Seite des Leitungsrohres (10) angeordnet ist.

7. Abscheidungsvorrichtung (1) nach einem der vorhergehenden Ansprüche, **dadurch gekennzeichnet, dass** der Durchflussbegrenzer (20) zwischen dem Phasendetektionssensor (30) und dem Ablassventil (40) angeordnet ist.

8. Abscheidungsvorrichtung (1) nach einem der vorhergehenden Ansprüche, **dadurch gekennzeichnet, dass** zwischen der Anschlussöffnung (11) und dem Ablassventil (40) ein Entleerungsventil (60) angeordnet ist.

9. Abscheidungsvorrichtung (1) nach einem der vorhergehenden Ansprüche, **dadurch gekennzeichnet, dass** das Ablassventil (40) derart mit der Regeleinrichtung (45) angesteuert ist, dass das Ablassventil (40) bei der Detektion des schweren Fluids (F2) mit dem Phasendetektionssensor (30) von der Geschlossenstellung in die Offenstellung gebracht wird, um das schwere Fluid (F2) abzulassen.

10. Abscheidungsvorrichtung (1) nach einem der Ansprüche 1 bis 6, **dadurch gekennzeichnet, dass** das Ablassventil (40) derart mit der Regeleinrichtung (45) angesteuert ist, dass das Ablassventil (40) bei der Detektion des leichten Fluids (F1) mit dem Phasendetektionssensor (30) in eine Offenstellung gebracht wird, um das leichte Fluid (F1) abzulassen.

11. Abscheidungsvorrichtung (1) nach einem der vorhergehenden Ansprüche, **dadurch gekennzeichnet, dass** die Regeleinrichtung (45) einen Verzögerungsgeber aufweist, mit dem die Regeleinrichtung (45) ein Regelsignal für das Ablassventil (40) erst nach einer definierten Detektionszeit des Phasendetektionssensors (30) ausgibt.

12. **Fluidbehältereinrichtung (100)** mit einem bodenseitigen Fluidsammelsumpf (101) für ein sich aus einem leichten Fluid (F1) absetzendes schweres Fluid (F2), wobei der Boden (102) des Fluidsammelsumpfes (101) in die Anschlussöffnung (11) einer Abscheidungsvorrichtung (1) nach einem der vorgehenden Ansprüche mündet.

13. Fluidbehältereinrichtung (100) nach Anspruch 12, **dadurch gekennzeichnet, dass** oberhalb des Fluidsammelsumpfes (101) eine Filtereinrichtung angeordnet ist.

14. **Fluidbehältereinrichtung (100)** mit einem deckenseitigen Fluidsammelsumpf (101) für ein sich aus einem schweren Fluid (F2) nach oben absetzendes leichtes Fluid (F1), wobei die Decke des Fluidsammelsumpfes (101) in die Anschlussöffnung (11) einer Abscheidungsvorrichtung (1) nach einem der Ansprüche 1 bis 11 mündet.

15. Fluidbehältereinrichtung (100) nach einem der Ansprüche 12 bis 14, **dadurch gekennzeichnet, dass** die Ablassöffnung (12) mit einem Auffangbehälter strömungsverbunden ist.

## Claims

1. **Separating device (1)** for fluid-collecting sumps, in particular of filter or water separators,
- comprising a line pipe (10), which has a connection opening (11) and an outlet opening (12),
- wherein the line pipe (10) is equipped with a phase detection sensor (30) for detecting a phase boundary (G) between a light fluid (F1) and a heavy fluid (F2), and an electronically actuatable outlet valve (40) between the phase detection sensor (30) and the outlet opening (12),
- wherein the outlet valve (40) is actuated by a regulating device (45) such that the outlet valve (40) is brought from an open position into a closed position when a phase boundary (G) is detected by the phase detection sensor (30),
- wherein the phase detection sensor (30) is arranged in a vertical line portion (13) of the line pipe (10), and
**characterised in that**
- a flow restrictor (20) is arranged in the line pipe (10),
- wherein the flow restrictor (20) limits the flow volume to a constant flow value as far as a line pressure of 10 bar on the side of the connection opening (11).

2. Separating device (1) according to claim 1, **characterised in that** the vertical line portion (13) extends from the phase detection sensor (30) to the connection opening (11).

3. Separating device (1) according to any one of the preceding claims, **characterised in that** a closure valve (50) is arranged between the phase detection sensor (30) and the connection opening (11).

4. Separating device (1) according to claim 3, **characterised in that** the closure valve (50) has a closure element rotatable about an axis of rotation (A), wherein the axis of rotation (A) is oriented transverse to the line pipe (10).

5. Separating device (1) according to claim 4, **characterised in that** the phase detection sensor (30) extends along the axis of rotation (A) into the line pipe (10).

6. Separating device (1) according to any one of claims 4 or 5, **characterised in that** the closure valve (50) is a ball valve, wherein an actuation means (51) of the ball valve is rotatable about the axis of rotation (A), wherein the actuation means (51) is arranged on the side of the line pipe (10) opposite the phase detection sensor (30).

7. Separating device (1) according to any one of the preceding claims, **characterised in that** the flow restrictor (20) is arranged between the phase detection sensor (30) and the outlet valve (40).

8. Separating device (1) according to any one of the preceding claims, **characterised in that** an emptying valve (60) is arranged between the connection opening (11) and the outlet valve (40).

9. Separating device (1) according to any one of the preceding claims, **characterised in that** the outlet valve (40) is actuated by the regulating device (45) such that the outlet valve (40) is brought from the closed position into the open position, in order to discharge the heavy fluid (F2), when the heavy fluid (F2) is detected by the phase detection sensor (30).

10. Separating device (1) according to any one of claims 1 to 6, **characterised in that** the outlet valve (40) is actuated by the regulating device (45) such that the outlet valve (40) is brought into an open position, in order to discharge the light fluid (F1), when the light fluid (F1) is detected by the phase detection sensor (30).

11. Separating device (1) according to any one of the preceding claims, **characterised in that** the regulating device (45) has a delay transmitter, with which the regulating device (45) outputs a control signal for the outlet valve (40) only after a defined detection time of the phase detection sensor (30).

12. **Fluid container device (100)** comprising a fluid-collecting sump (101) on the bottom for a heavy fluid (F2) settling out from a light fluid (F1), wherein the bottom (102) of the fluid-collecting sump (101) opens out into the connection opening (11) of a separating device (1) according to any one of the preceding claims.

13. Fluid container device (100) according to claim 12, **characterised in that** a filter device is arranged above the fluid-collecting sump (101).

14. **Fluid container device (100)** comprising a fluid-collecting sump (101) on the top for a light fluid (F1) settling out upwardly from a heavy fluid (F2), wherein the top of the fluid-collecting sump (101) opens out into the connection opening (11) of a separating device (1) according to any one of claims 1 to 11.

15. Fluid container device (100) according to any one of claims 12 to 14, **characterised in that** the outlet opening (12) is fluidically connected to a collection container.

## Revendications

1. **Dispositif de séparation (1)** pour des carters collecteurs de fluide, en particulier de séparateurs à filtre ou d'eau,
- avec un tube de conduit (10) qui présente une ouverture de raccordement (11) et une ouverture de sortie (12),
- dans lequel dans le tube de conduite (10) un capteur de détection de phase (30) est agencé pour la détection d'une limite de phase (G) entre un fluide léger (F1) et un fluide lourd (F2), ainsi qu'une soupape de sortie (40) actionnable électroniquement est agencée entre le capteur de détection de phase (30) et l'ouverture de sortie (12),
- dans lequel la soupape de sortie (40) est commandée avec un dispositif de régulation (45) de telle manière que la soupape de sortie (40) soit amenée lors de la détection d'une limite de phase (G) avec le capteur de détection de phase (30) d'une position ouverte dans une position fermée,
- dans lequel le capteur de détection de phase (30) est agencé dans une section de conduite (13) verticale du tube de conduite (10), et
**caractérisé en ce que**
- un limiteur de débit (20) est agencé dans le tube de conduite (10),
- dans lequel le limiteur de débit (20) délimite le volume de débit jusqu'à une pression de conduite sur le côté de l'ouverture de raccordement (11) de 10 bars à une valeur de débit constante.

2. Dispositif de séparation (1) selon la revendication 1, **caractérisé en ce que** la section de conduite (13) verticale s'étend du capteur de détection de phase (30) jusqu'à l'ouverture de raccordement (11).

3. Dispositif de séparation (1) selon l'une quelconque des revendications précédentes, **caractérisé en ce qu'**une soupape de fermeture (50) est agencée entre le capteur de détection de phase (30) et l'ouverture de raccordement (11).

4. Dispositif de séparation (1) selon la revendication 3, **caractérisé en ce que** la soupape de fermeture (50) présente un élément de fermeture rotatif autour d'un axe de rotation (A), dans lequel l'axe de rotation (A) est orienté transversalement au tube de conduite (10).

5. Dispositif de séparation (1) selon la revendication 4, **caractérisé en ce que** le capteur de détection de phase (30) s'étend le long de l'axe de rotation (A) dans le tube de conduite (10).

6. Dispositif de séparation (1) selon l'une quelconque des revendications 4 ou 5, **caractérisé en ce que** la soupape de fermeture (50) est un robinet à boisseau sphérique, dans lequel un moyen d'actionnement (51) du robinet à boisseau sphérique est rotatif autour de l'axe de rotation (A), dans lequel le moyen d'actionnement (51) est agencé sur le côté opposé au capteur de détection de phase (30) du tube de conduite (10).

7. Dispositif de séparation (1) selon l'une quelconque des revendications précédentes, **caractérisé en ce que** le limiteur de débit (20) est agencé entre le capteur de détection de phase (30) et la soupape de sortie (40).

8. Dispositif de séparation (1) selon l'une quelconque des revendications précédentes, **caractérisé en ce qu'une** soupape de vidange (60) est agencée entre l'ouverture de raccordement (11) et la soupape de sortie (40).

9. Dispositif de séparation (1) selon l'une quelconque des revendications précédentes, **caractérisé en ce que** la soupape de sortie (40) est commandée avec le dispositif de régulation (45) de telle manière que la soupape de sortie (40) soit amenée lors de la détection du fluide lourd (F2) avec le capteur de détection de phase (30) de la position fermée dans la position ouverte afin de sortir le fluide lourd (F2).

10. Dispositif de séparation (1) selon l'une quelconque des revendications 1 à 6, **caractérisé en ce que** la soupape de sortie (40) est commandée avec le dispositif de régulation (45) de telle manière que la soupape de sortie (40) soit amenée lors de la détection du fluide léger (F1) avec le capteur de détection de phase (30) dans une position ouverte afin de sortir le fluide léger (F1).

11. Dispositif de séparation (1) selon l'une quelconque des revendications précédentes, **caractérisé en ce que** le dispositif de régulation (45) présente un indicateur de retard avec lequel le dispositif de régulation (45) émet un signal de régulation pour la soupape de sortie (40) seulement après un temps de détection défini du capteur de détection de phase (30).

12. **Dispositif contenant de fluide (100)** avec un carter collecteur de fluide (101) côté fond pour un fluide lourd (F2) se séparant d'un fluide léger (F1), dans lequel le fond (102) du carter collecteur de fluide (101) débouche dans l'ouverture de raccordement (11) d'un dispositif de séparation (1) selon l'une quelconque des revendications précédentes.

13. Dispositif contenant de fluide (100) selon la revendication 12, **caractérisé en ce qu'**un dispositif de filtre est agencé au-dessus du carter collecteur de fluide (101).

14. **Dispositif contenant de fluide (100)** avec un carter collecteur de fluide (101) côté plafond pour un fluide léger (F1) se séparant d'un fluide lourd (F2) vers le haut, dans lequel le plafond du carter collecteur de fluide (101) débouche dans l'ouverture de raccordement (11) d'un dispositif de séparation (1) selon l'une quelconque des revendications 1 à 11.

15. Dispositif contenant de fluide (100) selon l'une quelconque des revendications 12 à 14, **caractérisé en ce que** l'ouverture de sortie (12) est reliée en écoulement à un récipient de récupération.
